# EUROPEAN PATENT SPECIFICATION

(11) **EP 3 273 378 B1**
(45) Date of publication and mention of the grant of the patent: **19.08.2020**
(21) Application number: 17182263.8
(22) Date of filing: 20.07.2017
(51) Int. Cl.: G06F 21/32, G04G 21/02, G06F 1/16, G06F 21/35, H04L 29/06, H04W 4/80, H04W 12/06

(54) **PORTABLE ELECTRIC DEVICE AND OPERATING METHOD THEREFOR**
TRAGBARE ELEKTRISCHE VORRICHTUNG UND BETRIEBSVERFAHREN DAFÜR
DISPOSITIF ÉLECTRIQUE PORTABLE ET SON PROCÉDÉ DE FONCTIONNEMENT

(30) Priority: 21.07.2016 US 201615216298
(43) Date of publication of application: 24.01.2018
(73) Proprietor: HTC Corporation, Taoyuan City 330 (TW)
(72) Inventor: Cheng, Kai-Horng, Taoyuan City 330 (TW); Chang, Shih-Hung, Taoyuan City 330 (TW); Lee, Hsin-Hao, Taoyuan City 330 (TW)
(74) Representative: Murgitroyd & Company

(56) References cited:
- EP-A1- 2 919 430
- EP-A1- 2 980 741
- US-A1- 2014 292 475
- US-A1- 2015 149 361
- US-A1- 2015 286 813

## Description

### TECHNICAL FIELD

The disclosure relates in general to an electric device and an operating method therefor, and more particularly to a portable electric device and an operating method therefor.

### BACKGROUND

With the development of the technology, various security related applications, for example, applications for payment, door lock/unlock and car lock/unlock, are provided by a portable electric device. A user can pay the money with his bank account, lock and unlock the door of his car or his house through wireless communication technology on the portable electric device. If the portable electric device is taken by other person, the portable electric device may be used by other person to pay or unlock the door, which may cause undesired loss for the owner of the portable electric device. Therefore, how to improve the security of the portable electric device is emphasized by the industry. Patent publication US2015/0149361 A1 discloses a wearable ring-shaped electronic device 300 comprising a buckle mechanism 314 comprising a microUSB connector configured to detect whether two ends of the electronic device 300 are buckled together. When the buckling mechanism 314 is open, the microUSB connector may be configured to connect to a personal electronic device (e.g., a computer, a laptop, etc.) for data transmission or power charge. On the other hand, when the buckling mechanism 314 is buckled and secured around the user's wrist, the electronic device 300 may detect the biometric signature from the user. A payment service is authenticated upon successful authentication.

Patent publication US2015/0286813 A1 discloses wearable identity manager device 100 is configured as a wearable bracelet comprising a first lock mechanism 130 and a second lock mechanism 140. Wearable identity manager device 100 also comprises computing device 110 and conducting wires 120, wherein computing device 110 is configured to detect whether a connection between conducting wires 120 is broken. Upon attaching wearable identity manager device 100 to his/her wrist, a user may be required to enter a password (e.g., via a user interface on computing device 110 or via another device paired to wearable identity manager device 100) so as to confirm the user's identity to wearable identity manager device 100. Upon confirming the user's identity, it is contemplated that wearable identity manager device 100 could then facilitate subsequent user authentications with other entities (e.g., point-of-sale devices, toll booths, financial institution websites, etc.) by wirelessly transmitting authentication data to those entities, so long as lock mechanism 130 remains in a locked configuration. It is possible to use a lock with a magnetic component to improve the connection when it is closed.

### SUMMARY

It is an object of the present invention to provide a portable electric device and an operation method for a portable electric device. This can be achieved by the features as defined in the independent claims. Further enhancements are characterised in the dependent claims. According to one embodiment, an operating method for a portable electric device is provided. The portable electric device has a fixing component, a body, and an authentication register. The authentication register is disposed in the body. The body has a first part and a second part. The operating method includes the following steps. Determining whether the fixing component is attached to the body so that the first part and the second part of the body are attached to each other to make the body be of a ring shape. Performing a first biometric identity (ID) verification when the fixing component is attached to the body. Setting the authentication register and locking the fixing component to the body when the first biometric ID verification is successful. Performing a security related application when the authentication register is set and the fixing component is locked to the body.

According to another embodiment, a portable electric device is provided. The portable electric device includes a fixing component, a body, an authentication register and a processor. The authentication register is disposed in the body. The body has a first part and a second part. The processor is for determining whether the fixing component is attached to the body so that the first part and the second part of the body are attached to each other to make the body be of a ring shape, performing a first biometric ID verification when the fixing component is attached to the body, setting the authentication register and locking the fixing component to the body when the first biometric ID verification is successful, and performing a security related application when the authentication register is set and the fixing component is locked to the body.

The above and other aspects of the disclosure will become better understood with regard to the following detailed description of the non-limiting embodiment(s). The following description of exemplary embodiments is made with reference to the accompanying exemplary drawings.

### BRIEF DESCRIPTION OF THE DRAWINGS

FIG. 1 shows a schematic diagram of a portable electric device when the fixing component is attached to the body according to an embodiment of the invention.
FIG. 2 shows the block diagram of the portable electric device when the fixing component is not attached to the body according to an embodiment of the invention.
FIG. 3 shows a flow chart of an operating method for the portable electric device according to an embodiment of the invention.
FIG. 4 shows a schematic diagram of the portable electric device when the fixing component is attached to the body according to another embodiment of the invention.
FIG. 5 shows a schematic diagram of the portable electric device when the fixing component is not attached to the body according to another embodiment of the invention.
FIG. 6 shows a flow chart of an operating method for the portable electric device according to an embodiment of the invention.
FIG. 7 shows the block diagram of the portable electric device and NFC reader according to an embodiment of the invention.
FIG. 8 shows a flow chart of an operating method for the portable electric device with no biometric characteristic stored in the secure element.
FIG. 9 shows a flow chart of an operating method for the portable electric device is wake up from the sleep mode when the authentication register is not set to the first value and the fixing component is not locked to the body.
FIG. 10 shows a flow chart of an operating method for detaching the fixing component from the body.
FIG. 11 shows substeps of step S602.
FIG. 12 shows a flow chart of an operating method for the portable electric device is wake up from the sleep mode when the authentication register is set to the first value and the fixing component is locked to the body.
FIG. 13 shows the block diagram of the portable electric device according to another embodiment of the invention.
FIG. 14 shows a flow chart of an operating method for the portable electric device according to another embodiment of the invention.

### DETAILED DESCRIPTION

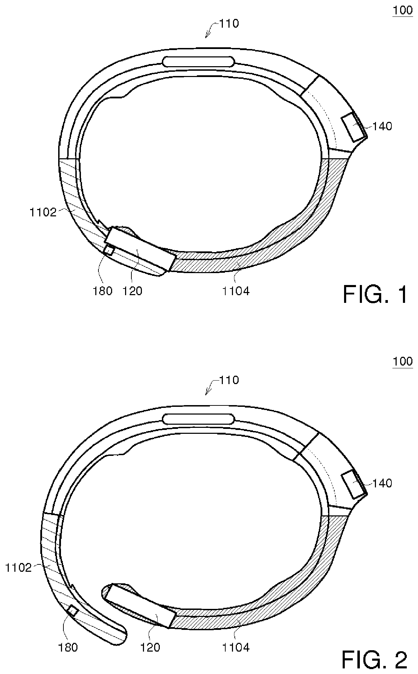

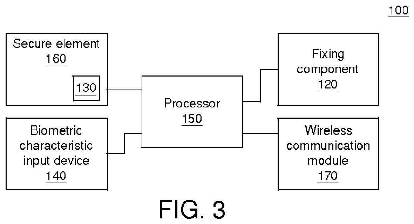

Referring to FIG. 1, FIG. 2 and FIG. 3. FIG. 1 shows a schematic diagram of a portable electric device 100 when the fixing component 120 is attached to the body 110 according to an embodiment of the invention. FIG. 2 shows a schematic diagram of the portable electric device 100 when the fixing component 120 is not attached to the body 110 according to an embodiment of the invention. FIG. 3 shows the block diagram of the portable electric device 100 according to an embodiment of the invention.

Portable electric device 100 includes a body 110, a fixing component 120, a biometric characteristic input device 140, a processor 150, a secure element 160, and a wireless communication module 170. The body 110 includes a first part 1102 and a second part 1104. The processor 150, the secure element 160 and the wireless communication module 170 are disposed in the body 110. The secure element 160 includes the authentication register 130. The biometric characteristic input device 140 is disposed on the body 110. The fixing component 120 is deposed on one of the first part 1102 and the second part 1104. For example, the fixing component 120 is deposed on the second part 1104. The portable electric device 100 can selectively include a sensor 180. The sensor 180 is deposed on one of the first part 1102 and the second part 1104. For example, the sensor 180 is deposed on the first part 1102.

Portable electric device 100 can be a smart watch, a smart band or any device that can be worn on a human body. The fixing component 120 is used for fixing the first part 1102 and the second part 1104. The secure element 160 is used for storing the biometric characteristic of the user of the portable electric device 100. The authentication register 130 is used for storing a value indicating a first biometric identity (ID) verification for security has been performed successfully, and therefore the security related applications can be performed with security. The biometric characteristic input device 140 is used for receiving the biometric characteristic from the user. The wireless communication module 170 is used for communicating with another wireless device through wireless communication. The processor 150 is used for controlling the fixing component 120, the biometric characteristic input device 140 and wireless communication module 170, performing the biometric ID verification, and processing the data stored in the authentication register 130 of the secure element 160. The processor 150 is electrically connected to the fixing component 120 to determine whether the fixing component 120 is attached to the body 110. In one embodiment, the portable electric device 100 can selectively include the sensor 180, and determines whether the fixing component 120 is attached to the body 110 by the sensor 180.

As shown in FIG. 1, when the fixing component 120 is attached to the body 110, it is represented that the first part 1102 and the second part 1104 of the body 110 are attached to each other to make the body 110 be of a ring shape. The biometric characteristic mentioned above is used for biometric ID authentication as a form of identification or access control.

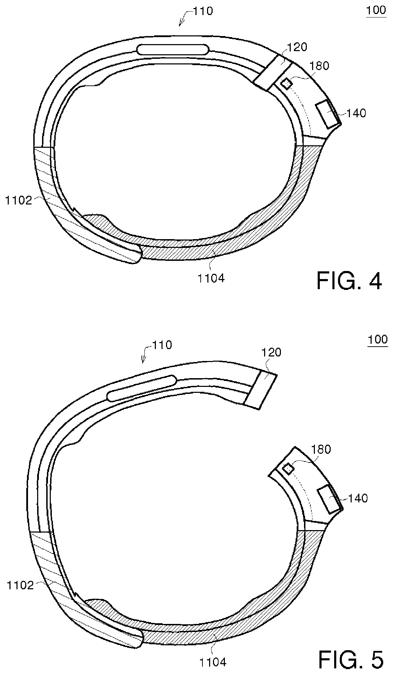

Referring to FIG. 4 and FIG. 5. FIG. 4 shows a schematic diagram of the portable electric device 100 when the fixing component 120' is attached to the body 110 according to another embodiment of the invention. FIG. 5 shows a schematic diagram of the portable electric device 100 when the fixing component 120' is not attached to the body 110 according to another embodiment of the invention.

In this embodiment, the fixing component 120' and sensor 180' can be deposed on part 1106 and part 1108, as shown in FIG. 4 and FIG. 5. The sensor 180' is used for sensing whether the fixing component 120 is attached to the body 110. When the fixing component 120' is attached to the body 110, the part 1106 and the part 1108 are attached to each other to make the body 110 be formed in a ring shape, as shown in FIG. 4.

Referring to FIG. 1, FIG. 2, FIG. 3 and FIG. 6, FIG. 6 shows a flow chart of an operating method for the portable electric device 100 according to an embodiment of the invention. First, in step S100, the portable electric device 100 is turned off or in a power off state. In step S102, the portable electric device 100 is turned on. For example, the user presses a power button of the portable electric device 100 to turn on the portable electric device 100.

In step S104, the processor 150 determines whether the fixing component 120 is attached to the body 110 so that the first part 1102 and the second part 1104 of the body 110 are attached to each other to make the body 110 be of a ring shape. When the first part 1102 and the second part 1104 of the body 110 are attached to each other to make the body 110 be of a ring shape, the portable electric device 100 can be worn on a human body. For example, the portable electric device 100 can be worn on a wrist of the user.

When the processor 150 determines that the fixing component 120 is not attached to the body 110, the method returns to step S100. That is, the portable electric device 100 is turned off. When the processor 150 determines that the fixing component 120 is attached to the body 110, the method proceeds to step S106.

In step S106, the processor 150 performs a first biometric ID verification, and determines the first biometric ID verification is successful or failed. For example, the biometric characteristic input device 140 receives a biometric characteristic from the user, and the processor 150 determines whether the received biometric characteristic is matched with a biometric characteristic stored in the secure element 160. When the received biometric characteristic is matched with the biometric characteristic stored in the secure element 160, the processor 150 determines that the first biometric ID verification is successful. When the received biometric characteristic is not matched with the biometric characteristic stored in the secure element 160, the processor 150 determines that the first biometric ID verification is failed. The biometric characteristic is at least one of fingerprints, retina patterns and iris patterns, voice, electrocardiogram, palm veins, face recognition, and DNA.

In one embodiment, the biometric characteristic input device 140 can be a fingerprint sensor for sensing the fingerprints of the user. In one embodiment, the biometric characteristic input device 140 can be a camera for capturing the retina patterns or iris patterns of the user. In one embodiment, the biometric characteristic input device 140 can be a microphone for receiving the voice of the user and converts the voice into an electrical signal.

When the first biometric ID verification is failed, the method goes to step S112. When the first biometric ID verification is successful in step S106, the method proceeds to step S108. In step S112, the processor 150 records the number of failures of the first biometric ID verification and determines whether the number of failures of the first biometric ID verification is greater than a predetermined number. When the number of failures of the first biometric ID verification is greater than the predetermined number, the method returns to step S100, the processor 150 turns off the portable electric device 100. When the number of failures of the first biometric ID verification is not greater than the predetermined number, the method returns to step S106.

In step S108, the processor 150 sets the authentication register 130 and locks the fixing component 120 to the body 110. For example, the fixing component 120 can include an electromagnetic device (e.g. an electromagnet, in which the magnetic fields is generated by applying electric currents) and a pin which is made of ferromagnetic materials. The magnetic poles of the electromagnetic device can be controlled by applying currents with different polarities. One way of locking the fixing component 120 to the body 110 is to make the pin be attracted by the electromagnetic device, such that the fixing component 120 and the body 110 get stuck by the pin. Besides, one way of unlocking the fixing component 120 from the body 110 is to applying different current to reduce the magnetism of the electromagnetic device, so that the pin is released and the fixing component 120 and the body 110 can be separated easily.

In one embodiment, the processor 150 sets the authentication register 130 to a first value which indicates the first biometric ID verification for security has been performed successfully, the biometric ID authentication is passed, and therefore the security related applications can be performed with security. In this situation, the processor 150 can perform the security related application, for example, to pay the money, or to unlock/lock the car or the door, or to perform other functions for which security is required.

Then, the method proceeds to step S110. In step S110, the processor 150 performs the security related application with the wireless communication module 170. Specifically, before the processor 150 performs the security related application, the processor 150 checks whether the authentication register 130 is set to the first value. And the processor 150 performs the security related application with the wireless communication module 170 only when the authentication register 130 is set to the first value. The wireless communication module 170 is at least one of Near Field Communication (NFC) module, Bluetooth communication module, and Wi-Fi communication module.

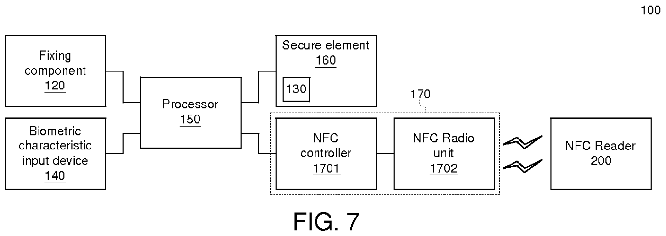

Take the wireless communication module 170 is implemented by a NFC module for example. Referring to FIG.7, FIG. 7 shows the block diagram of the portable electric device 100 and NFC reader 200 according to an embodiment of the invention. In this embodiment, the portable electric device 100 has NFC communication function. The wireless communication module 170 includes a NFC controller 1701 and NFC radio unit 1702.

In step S110, the processor 150 performs the security related application with the wireless communication module 170 which is the NFC module. Specifically, before the processor 150 performs the security related application, the processor 150 checks whether the authentication register 130 is set to the first value. And, when the authentication register 130 is set to the first value, the processor 150 outputs a command to the NFC controller 1701. Then, the NFC controller 1701 controls the NFC radio unit 1702 to communicate with the NFC reader 200 to perform the security related application.

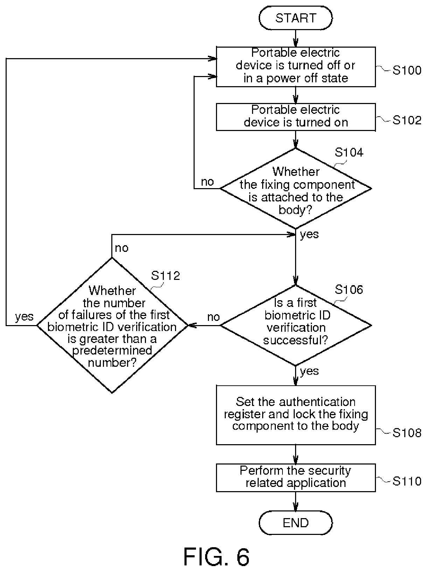

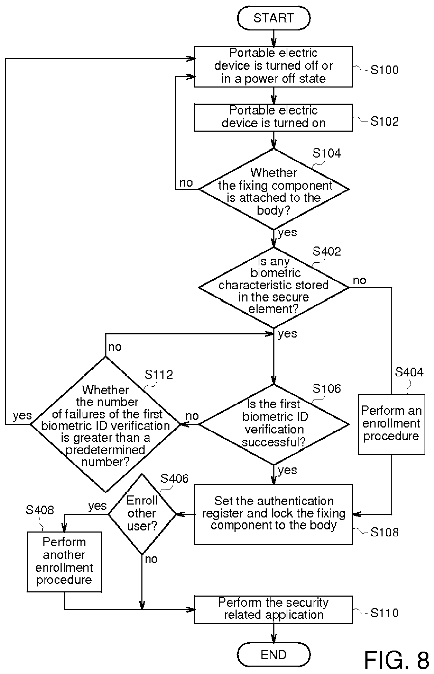

Referring to FIG. 1, FIG. 2, FIG. 3, and FIG. 8, FIG. 8 shows a flow chart of an operating method for the portable electric device 100 with no biometric characteristic stored in the secure element 160. The difference between the operating method in FIG. 6 and the operating method in FIG. 8 is that the operating method in FIG. 8 further includes step S402, step S404, step S406, and step S408.

After the portable electric device 100 is turned on by the user and the fixing component 120 is attached to the body 110 (i.e. after steps S100, S102, and S104), the method proceeds to step S402. In step S402, the processor 150 determines whether any biometric characteristic is stored in the secure element 160. When there is any biometric characteristic stored in the secure element 160, the method proceeds to step S106. When the there is no biometric characteristic stored in the secure element 160, the method proceeds to step S404.

In step S106, the processor 150 performs the first biometric ID verification, and determines the first biometric ID verification is successful or failed. In step S404, the processor 150 performs an enrollment procedure. When there is no biometric characteristic stored in the secure element 160, it is probably indicated that the portable electric device 100 is used at the first time or the portable electric device 100 is not enrolled by any user. So the user should enroll to use the portable electric device 100.

More specifically, the biometric characteristic input device 140 receives the biometric characteristic from the user, and the processor 150 stores the biometric characteristic to secure element 160 to perform the enrollment procedure. The enrollment procedure can, for example, include creating an account of the user, setting the user as an administrator or not, and setting the authority of the user. In one embodiment, the user who firstly enrolls in the portable electric device 100 can be set as the administrator of the portable electric device 100. When the enrollment procedure is completed, the method proceeds to step S108. In step S108, the authentication register 130 is set and the fixing component 120 is locked to the body 110.

Then, the method proceeds to step S406. In step S406, the processor 150 determines whether to enroll other user. If yes, the method proceeds to step S408. If not, the method goes to step S110.

In step S408, the processor 150 performs another enrollment procedure. In other word, the user who firstly enrolls in the portable electric device 100 (i.e. the administrator) of the portable electric device 100 can allow other user to enroll as the secondary user of the portable electric device 100. And, the administrator can set the authority of the secondary user so that the secondary user only can use part of the functions of the portable electric device 100. For example, the secondary user only can lock and unlock the door of the car or the house, but can not pay the money through the portable electric device 100.

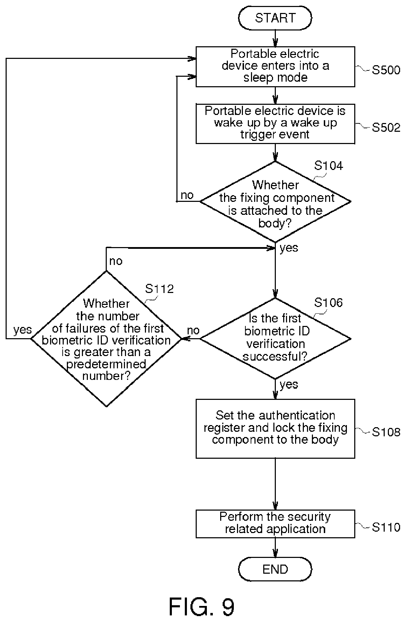

Referring to FIG. 1, FIG. 2, FIG. 3, and FIG. 9. FIG. 9 shows a flow chart of an operating method for the portable electric device 100 is wake up from the sleep mode when the authentication register 130 is not set to the first value and the fixing component 120 is not locked to the body 110.

In step S500, the portable electric device 100 enters into a sleep mode and the authentication register 130 is not set to the first value and the fixing component 120 is not locked to the body 110 (i.e. the first biometric ID verification has not been performed successfully). In step S502, the portable electric device 100 is wake up by a wake up trigger event from the user, and the portable electric device 100 returns to a normal mode from the sleep mode. The wake up trigger event includes, but not limit to, double click event, touch event, voice wake up event. The wake up trigger event can include any event which can wake up the portable electric device 100. In this embodiment, when the portable electric device 100 returns to the normal mode from the sleep mode, whether the fixing component 120 is attached to the body 110, and whether the first biometric ID verification is performed successfully are determined in steps S104 and S106, respectively. When the first biometric ID verification is performed successfully in step S106, the authentication register 130 is set to the first value and the fixing component 120 is locked to the body 110 in step S108, and the security related applications can be performed with security in step S110.

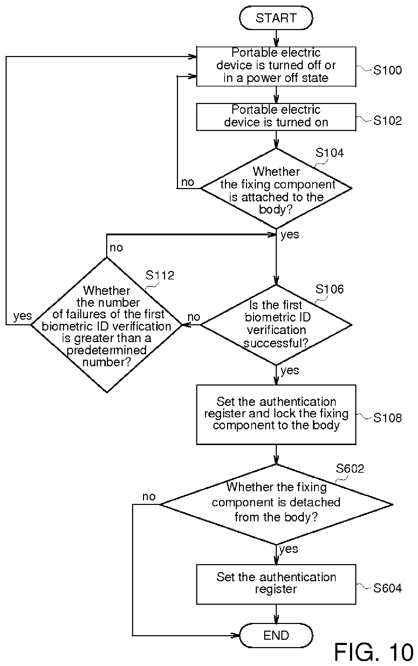

Referring to FIG. 1, FIG. 2, FIG. 3, and FIG. 10, FIG. 10 shows a flow chart of an operating method for detaching the fixing component 120 from the body 110. After the portable electric device 100 is turned on by the user, the fixing component 120 is attached to the body 110 and the first biometric ID verification is performed successfully (steps S100, S102, S104 and S106), the authentication register 130 is set to the first value and the fixing component 120 is locked to the body 110 (step S108). Then, the method proceeds to step S602.

In step S602, the processor 150 determines whether the fixing component 120 is detached from the body 110. When the fixing component 120 is not detached from the body 110, the method goes to end step. When the fixing component 120 is detached from the body 110, the method proceeds to step S604. In step S604, the processor 150 sets the authentication register 130. Specifically, the processor 150 sets the authentication register 130 from the first value to a second value which indicates the security related applications can not be performed. That is, the processor 150 can not perform the security related application after the authentication register 130 is set to the second value.

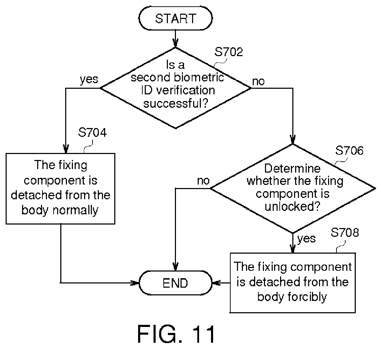

In one embodiment, in step S602, the processor 150 further determines whether the fixing component 120 is detached from the body 110 normally or forcebly. Specifically, referring to FIG. 11, FIG. 11 shows substeps of step S602. Step S602 includes steps S702, S704, S706 and S708. In step S702, the processor 150 performs a second biometric ID verification, and determines the second biometric ID verification is successful or failed. The second biometric ID verification is performed for unlocking the fixing component 120. When the second biometric ID verification is failed, the method goes to step S706. When the second biometric ID verification is successful, the method proceeds to step S704.

In step S704, the fixing component 120 is detached from the body 110 normally. That is, the processor 150 sets the authentication register 130 from the first value to the second value and unlocks the fixing component 120, such that the user can detach the fixing component 120 from the body 110 normally and easily. After the fixing component 120 is unlocked, the user can detach the fixing component 120 from the body 110 easily, and take off the portable electric device 100. For example, the user can detach the fixing component 120 from the wrist of the user.

In step S706, the processor 150 determines whether the fixing component 120 is unlocked. When the fixing component 120 is not unlocked, the method goes to end step. When the fixing component 120 is unlocked, the method proceeds to step S708. In step S708, the fixing component 120 is detached from the body 110 forcibly, and the authentication register 130 is set to the second value. That is, the fixing component 120 is unlocked without the second biometric ID verification. It is indicated that the fixing component 120 is detached from the body 110 forcibly by the user or by someone else. In one embodiment, the portable electric device 100 pops up a message to remind the user when the fixing component 120 is detached from the body 110 forcibly. Then, the portable electric device 100 enters in the power off state or into the sleep mode. Since the authentication register 130 is set to the second value when the fixing component 120 is detached forcibly, the security related applications can not be performed through the portable electric device 100.

In this way, the authentication register 130 is set to the second value before the fixing component 120 is unlocked and detached. Therefore, when the portable electric device 100 is taken by other person, the other person can not use the security related applications through the portable electric device 100 since the authentication register 130 is set to the second value and the security related application can not be performed.

Referring to FIG. 1, FIG. 2, FIG. 3 and FIG. 12, FIG. 12 shows a flow chart of an operating method for the portable electric device 100 is wake up from the sleep mode when the authentication register 130 is set to the first value, and the fixing component 120 is locked to the body 110. In step S802, the portable electric device 100 is in the sleep mode, and the authentication register 130 is set to the first value and the fixing component 120 is locked to the body 110. In step S804, the portable electric device 100 receives a wake up trigger event from the user. In step S806, the portable electric device 100 returns to the normal mode from the sleep mode by the wake up trigger event.

In this way, since the authentication register 130 is set to the first value (i.e. the first biometric ID verification has been performed successfully) in step S802, it is not necessary to perform the first biometric ID verification again to make the portable electric device 100 return to the normal mode from the sleep mode. In this embodiment, the user can use the security related applications through the portable electric device 100 without the first biometric ID verification after the portable electric device 100 returns to the normal mode from the sleep mode.

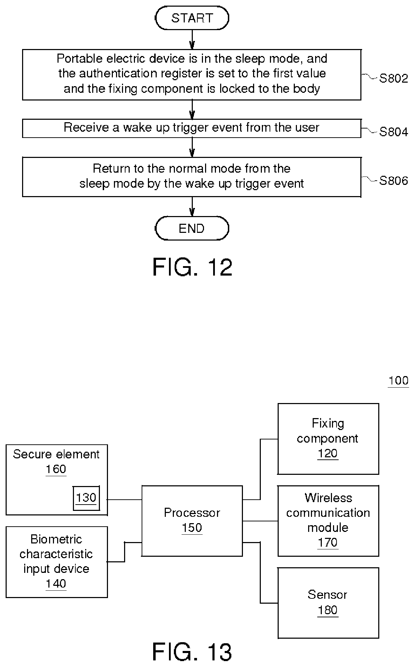

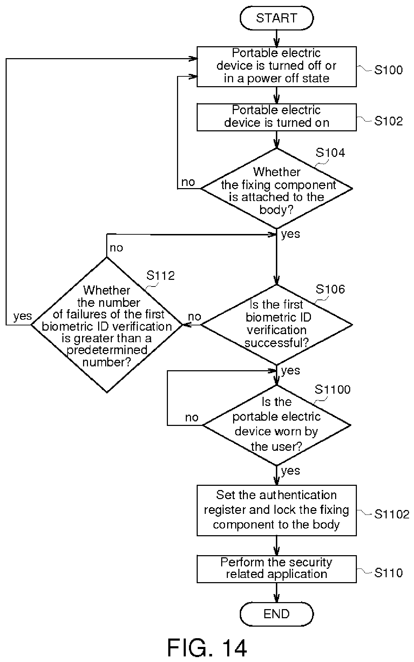

Referring to FIG. 13 and FIG. 14. FIG. 13 shows the block diagram of the portable electric device 100 according to another embodiment of the invention, and FIG. 14 shows a flow chart of an operating method for the portable electric device 100 according to another embodiment of the invention. The portable electric device 100 further includes a sensor 1300. After the portable electric device 100 is turned on by the user, the fixing component 120 is attached to the body 110 and the first biometric ID verification is performed successfully (steps S100, S102, S104 and S106), the method proceeds to step S1100.

In step S1100, the sensor 1300 senses whether the portable electric device 100 is worn by the user. For example, the sensor 1300 can sense, but not limit to, at least one of the the heartbeat, the body temperature, and the pulse of the user. When at least one of the heartbeat, the body temperature, and the pulse is sensed by the sensor 1300, it is determined that the portable electric device 100 is worn by the user. When the portable electric device 100 is not worn by the user, step S1100 is repeated. When the portable electric device 100 is worn by the user, the method proceeds to step S1102.

In step S1102, the processor 150 sets the authentication register 130 and locks the fixing component 120 to the body 110. That is, the processor 150 set the authentication register 160 to the first value and locking the fixing component 120 to the body 110 when the first biometric ID verification is successful and the portable electric device 100 is worn by the user. In step S110, the processor 150 performs the security related application.

Base on the above, the authentication register is set to a first particular value indicating the security related applications can be performed with security only when the first biometric ID verification is successful. And, the authentication register is set to a second particular value indicating the security related applications can not be performed when the fixing component is forcibly detached from the body or the first biometric ID verification is not successful. In this way, even the portable electric device is taken by other person, the other person can not use security related applications through the portable electric device since the authentication register is not set to the first particular value. Therefore, the security of using security related applications through the portable electric device is improved.

## Claims

1. An operating method for a portable electric device, the portable electric device having a fixing component (120), a body (110), and an authentication register (130) disposed in the body (110), the body having a first part and a second part, the method comprising the following steps in order:
determining whether the fixing component (120) is attached to the body (110) so that the first part and the second part of the body are attached to each other to make the body a ring shape; and
performing a first biometric identity, ID, verification when the fixing component (120) is attached to the body (110);
**characterised in**
both setting the authentication register (130) and locking the fixing component (120) attached to the body (110) when the first biometric ID verification is successful, and performing a security related application when the authentication register (130) is set and the fixing component (120) is locked to the body; and
when the first biometric ID verification is successful, the authentication register (130) is set to a first value and the fixing component (120) is locked to the body (110), the method further comprises:
setting the authentication register (130) to a second value when the fixing component (120) is detached from the body (110) without a second biometric ID verification;
wherein the security related application is performed only when the authentication register (130) is set to the first value.

2. The method according to claim 1, wherein when the fixing component (120) is attached to the body (110), the method further comprises:
determining whether any biometric characteristic is stored in a secure element of the portable electric device; and
performing an enrollment procedure when no biometric characteristic is stored in the secure element;
wherein the first biometric ID verification is performed according to the biometric characteristic stored in the secure element.

3. The method according to claim 1, wherein the portable electric device enters into a sleep mode when the locked fixing component is detached.

4. The method according to claim 1, wherein the portable electric device is turned off when number of failures of the first biometric ID verification is greater than a predetermined number.

5. The method according to claim 1, wherein when the first biometric ID verification is successful, the authentication register is set to a first value and the fixing component is locked to the body, the method further comprises:
performing a second biometric ID verification; and
setting the authentication register from a first value to a second value and unlocking the fixing component when the second biometric ID verification is successful;
wherein the security related application is performed only when the authentication register is set to the first value.

6. The method according to claim 1, wherein after the authentication register (130) is set and the fixing component (120) is locked to the body (110), the portable electric device is returned to a normal mode from a sleep mode by a wake up trigger event.

7. The method according to claim 1, wherein the method further comprises:
sensing whether the portable electric device is worn by a user; and
setting the authentication register (130) and locking the fixing component (120) to the body (110) when the first biometric ID verification is successful and the portable electric device is worn by the user.

8. A portable electric device, comprising:
a fixing component (120);
a body (110) having a first part and a second part,
an authentication register (130) disposed in the body (110); and
a processor (150) is configured for the following in order
to determine whether the fixing component (120) is attached to the body (110) so that the first part and the second part of the body (110) are attached to each other to make the body a ring shape; and
to perform a first biometric ID verification when the fixing component (120) is attached to the body (110);
**characterised in that** the processor is further configured for subsequently the following in order
to both set the authentication register (130) and lock the fixing component (120) attached to the body (110) when the first biometric ID verification is successful, and to perform a security related application when the authentication register (130) is set and the fixing component (120) is locked to the body (110); and
wherein when the first biometric ID verification is successful, and the authentication register (130) is set to a first value, the authentication register (130) is set to a second value when the fixing component (120) is detached from the body (110) without a second biometric ID verification, and the security related application is performed only when the authentication register (130) is set to the first value.

9. The portable electric device according to claim 8, wherein when the fixing component is attached to the body, the processor determines whether any biometric characteristic is stored in a secure element, and performs an enrollment procedure when no biometric characteristic is stored in the secure element;
wherein the first biometric ID verification is performed according to the biometric characteristic stored in the secure element.

10. The portable electric device according to claim 8, wherein the portable electric device enters into a sleep mode when the fixing component is detached.

11. The portable electric device according to claim 8, wherein when the first biometric ID verification is successful, the authentication register (130) is set to a first value and the fixing component (120) is locked, the processor (150) is further configured to perform a second biometric ID verification, to set the authentication register (130) from the first value to a second value and unlocking the fixing component (120) when the second biometric ID verification is successful;
wherein the security related application is performed only when the authentication register (130) is set to the first value.

12. The portable electric device according to claim 8, wherein after the authentication register (130) is set and the fixing component (120) is locked to the body (110), the portable electric device is returned to a normal mode from a sleep mode by a wake up trigger event.

13. The portable electric device according to claim 8, wherein the portable electric device further comprises:
a sensor (180) is configured to sense whether the portable electric device is worn by a user;
wherein the processor (150) is further configured to set the authentication register (130) and lock the fixing component (120) to the body (110) when the first biometric ID verification is successful and the portable electric device is worn by the user.

## Patentansprüche

1. Ein Betriebsverfahren für eine tragbare elektrische Vorrichtung, wobei die tragbare elektrische Vorrichtung eine Fixierungskomponente (120), einen Körper (110) und ein Authentifizierungsregister (130), das in dem Körper (110) angeordnet ist, beinhaltet, wobei der Körper einen ersten Teil und einen zweiten Teil aufweist, wobei das Verfahren die folgenden Schritte in Reihenfolge beinhaltet:
Bestimmen, ob die Fixierungskomponente (120) an dem Körper (110) angebracht ist, sodass der erste Teil und der zweite Teil des Körpers aneinander angebracht sind, um den Körper ringförmig zu machen; und
Durchführen einer ersten biometrischen Identitäts(ID)-Verifizierung, wenn die Fixierungskomponente (120) an dem Körper (110) angebracht ist;
**gekennzeichnet durch**:
sowohl Einstellen des Authentifizierungsregisters (130) als auch Verriegeln der Fixierungskomponente (120), die an dem Körper (110) angebracht ist, wenn die erste biometrische ID-Verifizierung erfolgreich ist, und
Durchführen einer sicherheitsbezogenen Anwendung, wenn das Authentifizierungsregister (130) eingestellt ist und die Fixierungskomponente (120) an dem Körper verriegelt ist; und
wenn die erste biometrische ID-Verifizierung erfolgreich ist, das Authentifizierungsregister (130) auf einen ersten Wert eingestellt ist und die Fixierungskomponente (120) an dem Körper (110) verriegelt ist, beinhaltet das Verfahren ferner Folgendes:
Einstellen des Authentifizierungsregisters (130) auf einen zweiten Wert, wenn die Fixierungskomponente (120) ohne eine zweite biometrische ID-Verifizierung von dem Körper (110) entfernt wird;
wobei die sicherheitsbezogene Anwendung nur dann durchgeführt wird, wenn das Authentifizierungsregister (130) auf den ersten Wert eingestellt ist.

2. Verfahren gemäß Anspruch 1, wobei dann, wenn die Fixierungskomponente (120) an dem Körper (110) angebracht ist, das Verfahren ferner Folgendes beinhaltet:
Bestimmen, ob eine biometrische Charakteristik in einem sicheren Element der tragbaren elektrischen Vorrichtung gespeichert ist; und
Durchführen eines Anmeldungsvorgangs, wenn keine biometrische Charakteristik in dem sicheren Element gespeichert ist;
wobei die erste biometrische ID-Verifizierung gemäß der biometrischen Charakteristik durchgeführt wird, die in dem sicheren Element gespeichert ist.

3. Verfahren gemäß Anspruch 1, wobei die tragbare elektrische Vorrichtung in einen Schlafmodus wechselt, wenn die verriegelte Fixierungskomponente entfernt wird.

4. Verfahren gemäß Anspruch 1, wobei die tragbare elektrische Vorrichtung ausgeschaltet wird, wenn die Anzahl an Misserfolgen der ersten biometrischen ID-Verifizierung größer ist als eine vorbestimmte Anzahl.

5. Verfahren gemäß Anspruch 1, wobei dann, wenn die erste biometrische ID-Verifizierung erfolgreich ist, das Authentifizierungsregister auf einen ersten Wert eingestellt ist und die Fixierungskomponente an dem Körper verriegelt ist, das Verfahren ferner Folgendes beinhaltet:
Durchführen einer zweiten biometrischen ID-Verifizierung; und
Einstellen des Authentifizierungsregisters von einem ersten Wert auf einen zweiten Wert und Entriegeln der Fixierungskomponente, wenn die zweite biometrische ID-Verifizierung erfolgreich ist;
wobei die sicherheitsbezogene Anwendung nur dann durchgeführt wird, wenn das Authentifizierungsregister auf den ersten Wert eingestellt ist.

6. Verfahren gemäß Anspruch 1, wobei die tragbare elektrische Vorrichtung nach dem Einstellen des Authentifizierungsregisters (130) und dem Verriegeln der Fixierungskomponente (120) an dem Körper (110) durch ein aufweckendes Auslöseereignis von einem Schlafmodus in einen Normalmodus zurückversetzt wird.

7. Verfahren gemäß Anspruch 1, wobei das Verfahren ferner Folgendes beinhaltet:
Erkennen, ob die tragbare elektrische Vorrichtung von einem Benutzer getragen wird; und
Einstellen des Authentifizierungsregisters (130) und Verriegeln der Fixierungskomponente (120) an dem Körper (110), wenn die erste biometrische ID-Verifizierung erfolgreich ist und die tragbare elektrische Vorrichtung von dem Benutzer getragen wird.

8. Eine tragbare elektrische Vorrichtung, die Folgendes beinhaltet:
eine Fixierungskomponente (120);
einen Körper (110), der einen ersten Teil und einen zweiten Teil aufweist, ein Authentifizierungsregister (130), das in dem Körper (110) angeordnet ist; und
ein Prozessor (150) ist für das Folgende in Reihenfolge konfiguriert:
Bestimmen, ob die Fixierungskomponente (120) an dem Körper (110) angebracht ist, sodass der erste Teil und der zweite Teil des Körpers (110) aneinander angebracht sind, um den Körper ringförmig zu machen; und
Durchführen einer ersten biometrischen ID-Verifizierung, wenn die Fixierungskomponente (120) an dem Körper (110) angebracht ist;
**dadurch gekennzeichnet, dass** der Prozessor ferner anschließend für das Folgende in Reihenfolge konfiguriert ist:
sowohl Einstellen des Authentifizierungsregisters (130) als auch Verriegeln der Fixierungskomponente (120), die an dem Körper (110) angebracht ist, wenn die erste biometrische ID-Verifizierung erfolgreich ist, und
Durchführen einer sicherheitsbezogenen Anwendung, wenn das Authentifizierungsregister (130) eingestellt ist und die Fixierungskomponente (120) an dem Körper (110) verriegelt ist; und
wobei dann, wenn die erste biometrische ID-Verifizierung erfolgreich ist und das Authentifizierungsregister (130) auf einen ersten Wert eingestellt ist, das Authentifizierungsregister (130) auf einen zweiten Wert eingestellt wird, wenn die Fixierungskomponente (120) ohne eine zweite biometrische ID-Verifizierung von dem Körper (110) entfernt wird, und die sicherheitsbezogene Anwendung nur dann durchgeführt wird, wenn das Authentifizierungsregister (130) auf den ersten Wert eingestellt ist.

9. Tragbare elektrische Vorrichtung gemäß Anspruch 8, wobei dann, wenn die Fixierungskomponente an dem Körper angebracht ist, der Prozessor bestimmt, ob eine biometrische Charakteristik in einem sicheren Element gespeichert ist, und einen Anmeldungsvorgang durchführt, wenn keine biometrische Charakteristik in dem sicheren Element gespeichert ist;
wobei die erste biometrische ID-Verifizierung gemäß der biometrischen Charakteristik durchgeführt wird, die in dem sicheren Element gespeichert ist.

10. Tragbare elektrische Vorrichtung gemäß Anspruch 8, wobei die tragbare elektrische Vorrichtung in einen Schlafmodus wechselt, wenn die Fixierungskomponente entfernt wird.

11. Tragbare elektrische Vorrichtung gemäß Anspruch 8, wobei dann, wenn die erste biometrische ID-Verifizierung erfolgreich ist, das Authentifizierungsregister (130) auf einen ersten Wert eingestellt ist und die Fixierungskomponente (120) verriegelt ist, der Prozessor (150) ferner konfiguriert ist, eine zweite biometrische ID-Verifizierung durchzuführen, das Authentifizierungsregister (130) von dem ersten Wert auf einen zweiten Wert einzustellen und Entriegeln der Fixierungskomponente (120), wenn die zweite biometrische ID-Verifizierung erfolgreich ist;
wobei die sicherheitsbezogene Anwendung nur dann durchgeführt wird, wenn das Authentifizierungsregister (130) auf den ersten Wert eingestellt ist.

12. Tragbare elektrische Vorrichtung gemäß Anspruch 8, wobei die tragbare elektrische Vorrichtung nach dem Einstellen des Authentifizierungsregisters (130) und dem Verriegeln der Fixierungskomponente (120) an dem Körper (110) durch ein aufweckendes Auslöseereignis von einem Schlafmodus in einen Normalmodus zurückversetzt wird.

13. Tragbare elektrische Vorrichtung gemäß Anspruch 8, wobei die tragbare elektrische Vorrichtung ferner Folgendes beinhaltet:
ein Sensor (180) ist konfiguriert, um zu erkennen, ob die tragbare elektrische Vorrichtung von einem Benutzer getragen wird;
wobei der Prozessor (150) ferner konfiguriert ist, um das Authentifizierungsregister (130) einzustellen und die Fixierungskomponente (120) an dem Körper (110) zu verriegeln, wenn die erste biometrische ID-Verifizierung erfolgreich ist und die tragbare elektrische Vorrichtung von dem Benutzer getragen wird.

## Revendications

1. Un procédé de fonctionnement pour un dispositif électrique portable, le dispositif électrique portable ayant un composant de fixation (120), un corps (110), et un registre d'authentification (130) disposé dans le corps (110), le corps ayant une première partie et une deuxième partie, le procédé comprenant les étapes suivantes dans l'ordre :
la détermination du fait que le composant de fixation (120) est attaché ou non au corps (110) de sorte que la première partie et la deuxième partie du corps sont attachées l'une à l'autre afin de donner au corps une forme d'anneau ; et
la mise en œuvre d'une première vérification d'identité, ID, biométrique quand le composant de fixation (120) est attaché au corps (110) ;
**caractérisé par**
à la fois le réglage du registre d'authentification (130) et le verrouillage du composant de fixation (120) attaché au corps (110) quand la première vérification d'ID biométrique a réussi, et
la mise en œuvre d'une application liée à la sécurité quand le registre d'authentification (130) est réglé et que le composant de fixation (120) est verrouillé sur le corps ; et quand la première vérification d'ID biométrique a réussi, que le registre d'authentification (130) est réglé à une première valeur et que le composant de fixation (120) est verrouillé sur le corps (110), le procédé comprend en sus :
le réglage du registre d'authentification (130) à une deuxième valeur quand le composant de fixation (120) est détaché du corps (110) sans une deuxième vérification d'ID biométrique ;
dans lequel l'application liée à la sécurité est mise en œuvre seulement quand le registre d'authentification (130) est réglé à la première valeur.

2. Le procédé selon la revendication 1, dans lequel quand le composant de fixation (120) est attaché au corps (110), le procédé comprend en sus :
la détermination du fait qu'une quelconque caractéristique biométrique est stockée ou non dans un élément sécurisé du dispositif électrique portable ; et
la mise en œuvre d'une procédure d'inscription quand aucune caractéristique biométrique n'est stockée dans l'élément sécurisé ;
dans lequel la première vérification d'ID biométrique est mise en œuvre selon la caractéristique biométrique stockée dans l'élément sécurisé.

3. Le procédé selon la revendication 1, dans lequel le dispositif électrique portable passe en mode veille quand le composant de fixation verrouillé est détaché.

4. Le procédé selon la revendication 1, dans lequel le dispositif électrique portable est mis hors tension quand le nombre d'échecs de la première vérification d'ID biométrique est supérieur à un nombre prédéterminé.

5. Le procédé selon la revendication 1, dans lequel quand la première vérification d'ID biométrique a réussi, que le registre d'authentification est réglé à une première valeur et que le composant de fixation est verrouillé sur le corps, le procédé comprend en sus :
la mise en œuvre d'une deuxième vérification d'ID biométrique ; et
le réglage du registre d'authentification d'une première valeur à une deuxième valeur et le déverrouillage du composant de fixation quand la deuxième vérification d'ID biométrique a réussi ;
dans lequel l'application liée à la sécurité est mise en œuvre seulement quand le registre d'authentification est réglé à la première valeur.

6. Le procédé selon la revendication 1, dans lequel après que le registre d'authentification (130) a été réglé et que le composant de fixation (120) a été verrouillé sur le corps (110), le dispositif électrique portable est ramené à un mode normal depuis un mode veille par un événement de déclenchement de réveil.

7. Le procédé selon la revendication 1, le procédé comprenant en sus :
la détection du fait que le dispositif électrique portable est porté ou non par un utilisateur ; et
le réglage du registre d'authentification (130) et le verrouillage du composant de fixation (120) sur le corps (110) quand la première vérification d'ID biométrique a réussi et que le dispositif électrique portable est porté par l'utilisateur.

8. Un dispositif électrique portable, comprenant :
un composant de fixation (120) ;
un corps (110) ayant une première partie et une deuxième partie,
un registre d'authentification (130) disposé dans le corps (110) ; et
un processeur (150) est configuré pour ce qui suit dans l'ordre
pour déterminer si le composant de fixation (120) est attaché au corps (110) de sorte que la première partie et la deuxième partie du corps (110) sont attachées l'une à l'autre afin de donner au corps une forme d'anneau ; et
pour mettre en œuvre une première vérification d'ID biométrique quand le composant de fixation (120) est attaché au corps (110) ;
**caractérisé en ce que** le processeur est en sus configuré pour ce qui suit ensuite dans l'ordre
à la fois pour régler le registre d'authentification (130) et verrouiller le composant de fixation (120) attaché au corps (110) quand la première vérification d'ID biométrique a réussi, et
pour mettre en œuvre une application liée à la sécurité quand le registre d'authentification (130) est réglé et que le composant de fixation (120) est verrouillé sur le corps (110) ; et
dans lequel quand la première vérification d'ID biométrique a réussi, et que le registre d'authentification (130) est réglé à une première valeur, le registre d'authentification (130) est réglé à une deuxième valeur quand le composant de fixation (120) est détaché du corps (110) sans une deuxième vérification d'ID biométrique, et l'application liée à la sécurité est mise en œuvre seulement quand le registre d'authentification (130) est réglé à la première valeur.

9. Le dispositif électrique portable selon la revendication 8, dans lequel quand le composant de fixation est attaché au corps, le processeur détermine si une quelconque caractéristique biométrique est stockée dans un élément sécurisé, et met en œuvre une procédure d'inscription quand aucune caractéristique biométrique n'est stockée dans l'élément sécurisé ;
dans lequel la première vérification d'ID biométrique est mise en œuvre selon la caractéristique biométrique stockée dans l'élément sécurisé.

10. Le dispositif électrique portable selon la revendication 8, le dispositif électrique portable passant en mode veille quand le composant de fixation est détaché.

11. Le dispositif électrique portable selon la revendication 8, dans lequel quand la première vérification d'ID biométrique a réussi, que le registre d'authentification (130) est réglé à une première valeur et que le composant de fixation (120) est verrouillé, le processeur (150) est en sus configuré pour mettre en œuvre une deuxième vérification d'ID biométrique, pour régler le registre d'authentification (130) de la première valeur à une deuxième valeur et le déverrouillage du composant de fixation (120) quand la deuxième vérification d'ID biométrique a réussi ;
dans lequel l'application liée à la sécurité est mise en œuvre seulement quand le registre d'authentification (130) est réglé à la première valeur.

12. Le dispositif électrique portable selon la revendication 8, dans lequel après que le registre d'authentification (130) a été réglé et que le composant de fixation (120) a été verrouillé sur le corps (110), le dispositif électrique portable est ramené à un mode normal depuis un mode veille par un événement de déclenchement de réveil.

13. Le dispositif électrique portable selon la revendication 8, le dispositif électrique portable comprenant en sus :
un détecteur (180) est configuré pour détecter si le dispositif électrique portable est porté par un utilisateur ;
dans lequel le processeur (150) est en sus configuré pour régler le registre d'authentification (130) et verrouiller le composant de fixation (120) sur le corps (110) quand la première vérification d'ID biométrique a réussi et que le dispositif électrique portable est porté par l'utilisateur.
